# EUROPÄISCHE PATENTSCHRIFT

(11) **EP 4 127 523 B1**
(45) Veröffentlichungstag und Bekanntmachung des Hinweises auf die Patenterteilung: **28.02.2024**
(21) Anmeldenummer: 21710949.5
(22) Anmeldetag: 08.03.2021
(51) Int. Cl.: F16H 63/18

(54) **SCHALTVORRICHTUNG EINER GETRIEBEEINHEIT INSBESONDERE EINES HYBRIDANTRIEBSSTRANGS**
SHIFTING DEVICE OF A TRANSMISSION UNIT, MORE PARTICULARLY OF A HYBRID DRIVE TRAIN
DISPOSITIF DE CHANGEMENT DE VITESSE D'UNE UNITÉ DE TRANSMISSION, PLUS PARTICULIÈREMENT D'UNE CHAÎNE CINÉMATIQUE HYBRIDE

(30) Priorität: 02.04.2020 DE 102020204330
(43) Veröffentlichungstag der Anmeldung: 08.02.2023
(73) Patentinhaber: Magna PT B.V. & Co. KG, 74199 Untergruppenbach (DE)
(72) Erfinder: KAPP, Stefan, 74399 Walheim (DE)
(74) Vertreter: Reuter, Silke Beatrix
(86) Internationale Anmeldenummer: PCT/EP2021/055807
(87) Internationale Veröffentlichungsnummer: WO 2021/197768

(56) Entgegenhaltungen:
- EP-A1- 1 286 088
- WO-A1-2015/117610
- AT-A4- 520 187
- DE-A1-102014 214 533
- DE-B3-102018 214 755

## Beschreibung

Die vorliegende Erfindung betrifft eine Schaltvorrichtung einer Getriebeeinheit, insbesondere eines Hybridantriebsstrangs für Kraftfahrzeuge, mit einem Schaltwalzenkörper, der um eine Schaltwalzenachse endlos drehbar ist, und mit einer Anschlageinrichtung zum Referenzieren einer Drehstellung des Schaltwalzenkörpers.

Weiterhin betrifft die vorliegende Erfindung eine Getriebeeinheit für ein Kraftfahrzeug, mit einer Schaltvorrichtung zum Schalten von Gangstufen.

Hybridantriebsstränge für Kraftfahrzeuge sind in den letzten Jahren populär geworden. Hybridantriebsstränge können dabei auf unterschiedliche Art und Weise realisiert werden.

Ein Beispiel sind sogenannte serielle Hybridantriebsstränge, bei denen ein Ausgang eines Verbrennungsmotors mit einem Generator verbunden ist, wobei ein Abtrieb des Hybridantriebsstranges mit einem elektrischen Motor verbunden ist, und wobei Motor und Generator an eine gemeinschaftliche Batterie angeschlossen sind.

Parallele Hybridantriebsstränge sind dazu in der Lage, sowohl verbrennungsmotorische als auch elektromotorische Antriebsleistung auf einen Abtrieb zu übertragen. Hier ist in manchen Fällen eine elektrische Maschine um eine Kurbelwelle herum angeordnet, und die Kurbelwelle ist über eine Anfahrkupplung mit einem Abtrieb verbindbar, und zwar in der Regel über ein Stufengetriebe.

Auch Hybridantriebsstränge, bei denen ein Verbrennungsmotor eine Achse des Fahrzeugs antreibt und eine elektrische Maschine eine andere Achse des Fahrzeugs antreibt, sind allgemein bekannt (axle-split).

Ferner sind Parallel-Hybridantriebsstränge mit Doppelkupplungsgetrieben bekannt, wobei eine elektrische Maschine an einen Eingang von einem der Teilgetriebe angeschlossen sein kann, oder mit einem Ausgang des Doppelkupplungsgetriebes verbunden sein kann. Der Einsatz von Doppelkupplungsgetrieben ermöglicht einen zugkraftunterbrechungsfreien Gangwechsel.

Getriebeanordnungen weisen zum Einrichten der unterschiedlichen Gangstufen eine Mehrzahl von Schaltkupplungen auf. Schaltkupplungen dienen dazu, einen Radsatz in den Leistungsfluss zu bringen (hierbei wird ein Losrad eines Radsatzes mit einer zugeordneten Welle verbunden). Die Ansteuerung der Schaltkupplung erfolgt dabei beispielsweise über eine Schaltvorrichtung die eine Schaltwalze umfasst. Der Verdrehwinkel der Schaltwalze muss dabei genau bekannt sein.

Schaltwalzen, sowie Verfahren zum Referenzieren der Drehstellung der Schaltwalzen sind grundsätzlich bekannt. Hierbei sind die Schaltwalzen häufig mit sogenannten Endanschlägen ausgeführt, wobei ein Positionssensor die entsprechende Winkelposition des Endanschlags erfassen kann.

Das Dokument WO 2015/ 149 797 A1 offenbart beispielsweise eine Betätigungsvorrichtung zum Betätigen eines Getriebes, mit einer drehbaren Schaltwalze, wobei ein mit der Schaltwalze drehfest verbundener Endanschlag derart mit einer Signalindikationseinrichtung zusammenwirkt, dass bei einem relativen Verschieben von der Signalindikationseinrichtung und dem Endanschlag in einer bestimmten Drehstellung der Schaltwalze ein Positionssignal erzeugbar ist. Das Positionssignal ist durch einen die Antriebskraft des Antriebsmotors in der bestimmten Drehstellung verändernden, mechanischen Widerstand erzeugbar.

Aus dem Dokument EP 1 286 088 A1 ist es bekannt, an einer Schaltwalze einen Magnetring festzulegen, der zur Drehpositionserfassung der jeweiligen Schaltwalze mittels geeigneter Sensoren ausgebildet ist.

Die DE 10 2018 214 755 B3 offenbart eine Schaltwalzenanordnung für eine Schaltvorrichtung einer Getriebeanordnung mit einem Schaltwalzenkörper, der um eine Schaltwalzenachse drehbar ist. Die Schaltwalzenanordnung umfasst weiterhin eine Anschlageinrichtung zum Referenzieren einer Drehstellung des Schaltwalzenkörpers, wobei die Anschlageinrichtung ein Anschlagelement aufweist. In einer Referenzposition kann das Anschlagelement mit einem Gehäuseanschlag in Kontakt kommen.

Aus der AT 520 187 A4 ist eine Schalteinrichtung für eine Kupplung oder Bremse eines Doppelkupplungsgetriebes bekannt.

Sowohl aus diesem Dokument, wie auch aus den Dokumenten WO2015/117610 A1 und DE102014214553 A1 gehen Schaltvorrichtungen mit einer ersten und einer zweiten Schaltwalze hervor.

Wie oben beschrieben, kann zum Referenzieren der Drehposition ein rotatorischer Endanschlag in die Schaltwalzen integriert werden. Hierbei ist jedoch die Verdrehbarkeit der Schaltwalzen begrenzt. Breite und massive Anschläge reduzieren den zur Verfügung stehenden Verdrehwinkel der Schaltwalze zum Teil signifikant.

Bei bekannten Schaltvorrichtungen, die einen fest mit dem Schaltwalzenkörper verbundenen Anschlag aufweisen, ergibt sich die maximale Verdrehbarkeit des Schaltwalzenkörpers durch 360° abzüglich des Umfangswinkels des Anschlagelementes und abzüglich eines Umfangswinkels des Referenzelementes, das beispielsweise ein gehäusefestes Element, wie ein Gehäuseanschlag sein kann. Hier kann der maximale Verdrehwinkel im Stand der Technik nur bei 290° liegen, wenn sich beispielsweise das Anschlagelement über 35° erstreckt und wenn sich der Gehäuseanschlag ebenfalls um 35° erstreckt.

Insbesondere durch die oben bereits genannte Hybridisierung von Getrieben entstehen neue Herausforderungen an die Schaltvorrichtungen. Unter Umständen ist es vorteilhaft, wenn die Schaltwalze in beiden Verdrehrichtungen beliebig/endlos verdreht werden kann.

Sofern Schaltwalzen eine über 360° hinausgehende Verdrehung erfordern, sind die aus dem Stand der Technik bekannten Verfahren zum Einlernen der Schaltwalze, die Endanschläge benötigen, auf diese Art und Weise nicht möglich.

Ein Referenzieren eines Verdrehwinkels kann hierbei über Absolutsensoren erfolgen, was allerdings einen erheblichen Kostenaufwand bedeutet.

Es ist vor diesem Hintergrund eine Aufgabe der Erfindung, eine Schaltvorrichtung sowie eine Getriebeeinheit zu schaffen, bei denen die Probleme aus dem Stand der Technik wenigstens teilweise verringert werden und vorzugsweise eine Schaltvorrichtung zu schaffen, die eine Schaltwalze umfasst, die in beide Verdrehrichtungen endlos verdreht werden kann und die auf eine einfache Möglichkeit eine Referenzierung des Schaltwinkels/Verdrehwinkels bietet.

Die obige Aufgabe wird gelöst durch eine Schaltvorrichtung einer Getriebeeinheit, insbesondere für Kraftfahrzeuge, mit den Merkmalen des Anspruch 1.

Vorteilhafte Ausgestaltungen der vorliegenden Erfindung ergeben sich aus den abhängigen Ansprüchen.

Durch die erfindungsgemäße Ausgestaltung der Schaltvorrichtung ist auf einfache Art und Weise eine Referenzierung des Schaltwinkels möglich. Des Weiteren ist eine endlose Verdrehung des Schaltwalzenkörpers und somit ein Gesamtschaltwinkel von 360 Grad erreichbar. Dies ist möglich, da der Schaltanschlag der Anschlageinrichtung nur bei Bedarf oder in einem vordefinierten Schaltwinkelbereich aktiviert wird.

Die Anschlageinrichtung wird hierbei durch einen Schaltanschlag, der an der zweiten Schaltstange angebunden ist und einen Endanschlag, der an der zweiten Schaltwalze angeordnet ist, gebildet.

Der Schaltanschlag kann zwischen einer "Neutralposition", in der der Schaltanschlag nicht in Eingriff mit dem Endanschlag ist, und einer "Aktivierungsposition" in der der Schaltanschlag mit dem Endanschlag in Eingriff bringbar ist, verlagert werden. Die Verlagerung ist dabei eine axiale Verlagerung die korrespondierend zu der axialen Verlagerung des in der Schaltkontur der ersten Schaltwalze geführten Mitnehmers ist.

In der Neutralposition kann die zweite Schaltwalze endlos verdreht werden.

Eine Verstellung des Schaltanschlags in die Aktivierungsposition erfolgt hierbei über eine Zwangskopplung der ersten Schaltstange die den Mitnehmer umfasst, mit der parallel hierzu angeordneten zweiten Schaltstange, die den Schaltanschlag umfasst. Die Zwangskopplung wird über ein Koppelelement erreicht.

In der Aktivierungsposition kommt es bei einem Verdrehen der zweiten Schaltwalze zu einem Aufeinandertreffen des Endanschlags auf den Schaltanschlag und somit zu einem Blockieren der Verdrehung der zweiten Schaltwalze. Diese blockierte Position der zweiten Schaltwalze ist einer Referenzposition d.h. einem definierten Verdrehwinkel dieser Schaltwalze zugeordnet.

Ferner wird die obige Aufgabe gelöst durch eine Getriebeeinheit für einen Antriebsstrang eines Kraftfahrzeuges nach Anspruch 7, die eine Schaltvorrichtung zum Schalten von Gangstufen der erfindungsgemäßen Art aufweist.

Ausführungsbeispiele der Erfindung sind in der Zeichnung dargestellt und werden in der nachfolgenden Beschreibung näher erläutert. Es zeigen:
- Fig. 1: eine schematische Darstellung eines Hybridantriebsstranges eines Kraftfahrzeuges,
- Fig. 2: eine perspektivische erste Ansicht auf eine erfindungsgemäße Schaltwalzenvorrichtung,
- Fig. 3: eine perspektivische zweite Ansicht auf die Schaltwalzenvorrichtung der Figur 2,
- Fig. 4: eine Ansicht auf die zweite Schaltwalze mit zweiter Schaltstange, das Koppelelement sowie die erste Schaltstange mit Anschlagelement,
- Fig. 5: eine Ansicht auf die erste Schaltwalze mit erster Schaltstange und Anschlagelement,
- Fig. 6: eine perspektivische Ansicht der Schaltwalzenvorrichtung in einer Neutralstellung des Schaltanschlags; und
- Fig. 7: eine perspektivische Ansicht der Schaltwalzenvorrichtung in einer Aktivierungsstellung des Schaltanschlags.

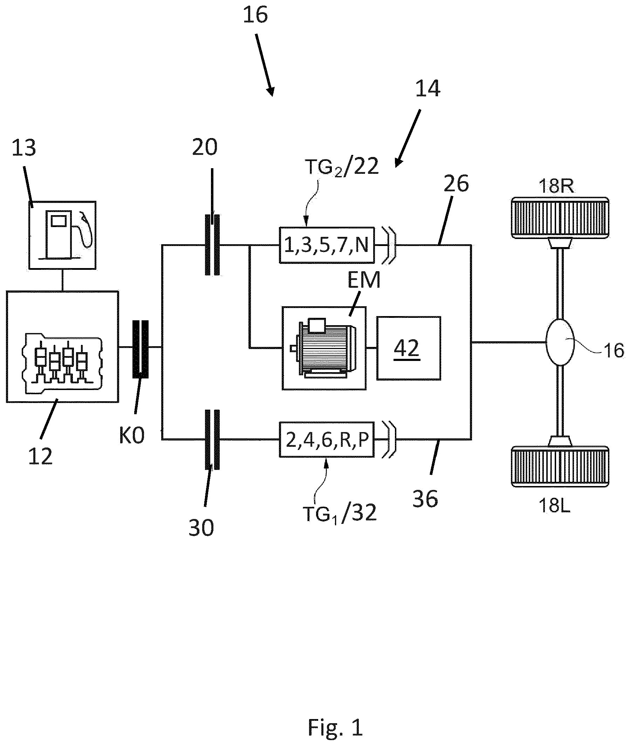

In Figur 1 ist ein Antriebsstrang für ein Kraftfahrzeug generell mit 10 bezeichnet. Das Kraftfahrzeug kann beispielsweise ein Personenkraftwagen sein.

Der Antriebsstrang 10 beinhaltet einen Antriebsmotor 12, beispielsweise in Form eines Verbrennungsmotors, der aus einem Energiespeicher wie einem Kraftstofftank 13 versorgt wird. Ferner beinhaltet der Antriebsstrang 10 eine Getriebeanordnung in Form eines Doppelkupplungsgetriebe 14 mit einer Antriebsseite und einer Abtriebsseite. Der Verbrennungsmotor ist über eine Kupplung K0 mit der Antriebsseite verbindbar. Die Abtriebsseite ist mit einem Differential 16 verbunden. Das Differential 16 verteilt Antriebsleistung auf ein linkes und ein rechtes angetriebenes Rad 18L, 18R.

Das Doppelkupplungsgetriebe 14 beinhaltet eine erste Reibkupplung 30 sowie ein erstes Teilgetriebe 32 (TG1). Das erste Teilgetriebe 32 beinhaltet beispielsweise die geraden Gangstufen 2, 4, 6, den Rückwärtsgang R und ggfls. die Parksperrenfunktion, die mittels zugeordneter Schaltkupplungen ein- und auslegbar sind. Die erste Reibkupplung 30 und das erste Teilgetriebe 32 (TG1) bilden einen ersten Leistungsübertragungspfad 36 zur Übertragung von Antriebsleistung von dem Antriebsmotor 12 zu dem Differential 16.

Das Doppelkupplungsgetriebe 14 beinhaltet eine zweite Reibkupplung 20 sowie ein zweites Teilgetriebe 22 (TG2). Das zweite Teilgetriebe 22 (TG2) beinhaltet beispielsweise die ungeraden Gangstufen 1, 3, 5 die mittels schematisch angedeuteter Schaltkupplungen 24 ein- und auslegbar sind. Die zweite Reibkupplung 20 und das zweite Teilgetriebe TG2 bilden einen zweiten Leistungsübertragungspfad 26 zur Übertragung von Leistung von dem Antriebsmotor VM zu dem Differential 16.

Ferner beinhaltet der Antriebsstrang 10 eine elektrische Maschine EM, die mit einer Anordnung 42 zur Ansteuerung und Energieversorgung verbunden ist. Die Anordnung 42 kann beispielsweise eine Leistungselektronik mit einem Umrichter sowie eine Batterie beinhalten. Eventuell ist auch die Getriebesteuerung integriert.

Die elektrische Maschine EM ist an einen Eingang des zweiten Teilgetriebes 22 (TG2) fest angebunden, beispielsweise mittels eines Stirnradsatzes oder dergleichen. In einer anderen Ausführungsform kann die elektrische Maschine EM auch an einen Ausgang des zweiten Teilgetriebes angebunden sein.

Das erste Teilgetriebe 32 (TG1) wird als passives Teilgetriebe, das zweite Teilgetriebe 22 (TG2) als elektrifiziertes Teilgetriebe bezeichnet.

Das Doppelkupplungsgetriebe 14 weist zum Einrichten der unterschiedlichen Gangstufen eine Mehrzahl von Schaltkupplungen auf, die einseitig oder beidseitig wirkend ausgeführt sein können. Die Schaltkupplungen dienen dazu ein Losrad eines Radsatzes mit der zugeordneten Welle drehfest zu verbinden und somit den Radsatz in den Leistungsfluss zu bringen Die Schaltkupplungen werden mittels einer Schaltmuffe geschaltet, derart, dass bei einer einseitigen Schaltkupplung der eine Radsatz in den Leistungsfluss versetzbar ist, oder eine Neutralstellung einrichtbar ist. Bei der Ausführung einer zweiseitigen Schaltkupplung ist entweder der eine Radsatz oder der andere Radsatz in den Leistungsfluss versetzbar ist oder eine Neutralstellung der Schaltwalzenanordnung einrichtbar.

Zum axialen Bewegen und folglich Schalten der Schaltmuffen des Doppelkupplungsgetriebes 14 ist eine Schaltvorrichtung 40 vorgesehen. Die Schaltvorrichtung 40 ist als Schaltaktuatorik realisiert, derart, dass Gangstufen des Doppelkupplungsgetriebes 14 automatisiert gewechselt werde können.

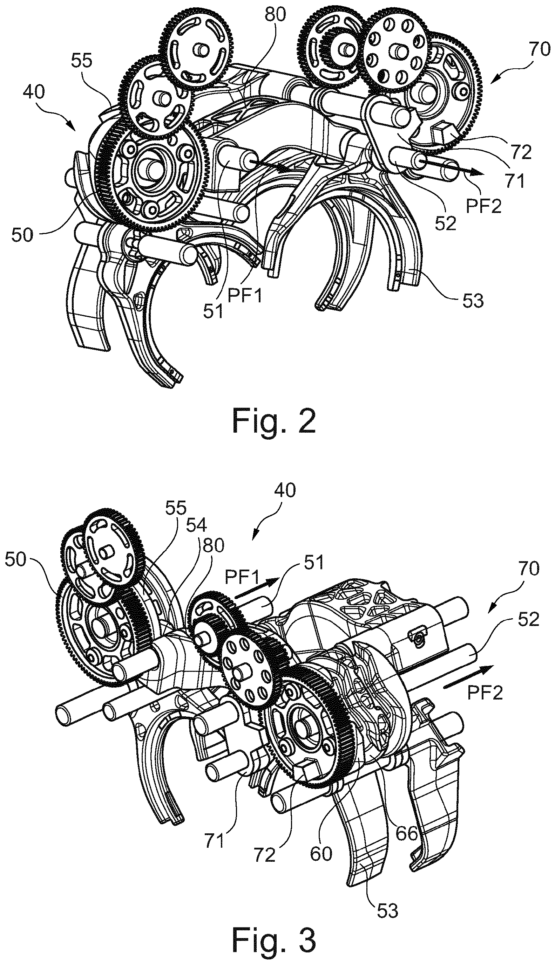

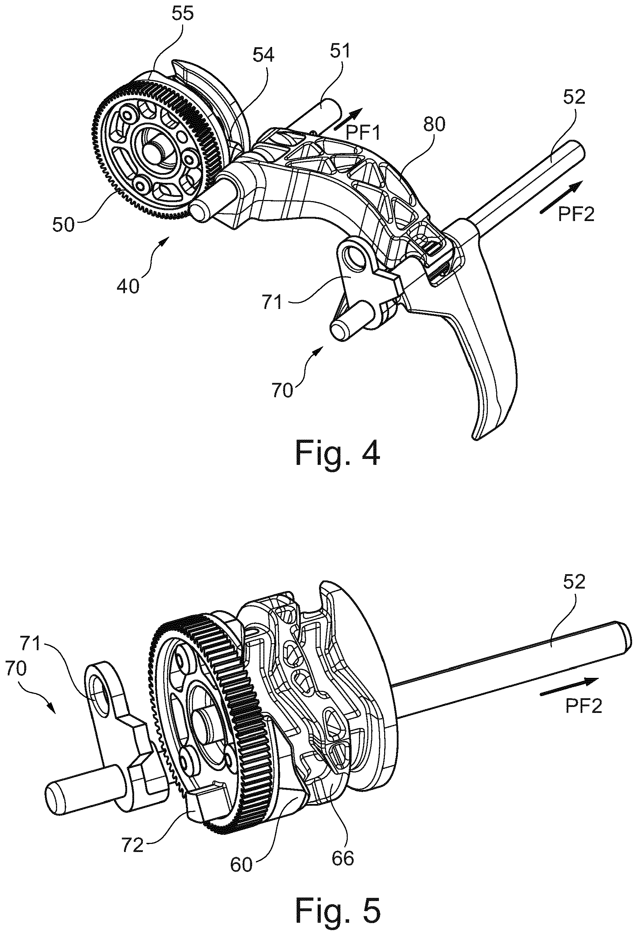

Wie es aus den Figuren 2 - 7 zu erkennen ist, umfasst die Schaltvorrichtung 40 eine erste Schaltwalze 50 mit zugeordneter erster Schaltstange 51, eine zweite Schaltstange 52, einem Schaltelement 53, eine zweite Schaltwalze 60, eine Anschlageinrichtung 70 sowie ein die erste und zweite Schaltstange 51/ 52 verbindendes Koppelement 80.

Die erste Schaltwalze 50 weist einen zylindrischen Schaltwalzenkörper auf, der um eine Drehachse verdrehbar gelagert ist, und zwar verdrehbar in Bezug auf ein Gehäuse 38. Das Gehäuse 38 kann beispielsweise ein Gehäuse der Getriebeanordnung sein.

Die erste Schaltwalze 50 ist mit einem Antriebsglied verbunden, und zwar an einer axialen Stirnseite hiervon. Das Antriebsglied kann beispielsweise durch ein Zahnrad gebildet sein, das eine Außenverzahnung aufweist. Die Außenverzahnung des Antriebsgliedes kann beispielsweise mit einem Antriebsritzel eines Schaltwalzenmotors in Eingriff stehen. Der Schaltwalzenmotor kann beispielsweise ein elektrischer Motor sein. Durch Ansteuern des Schaltwalzenmotors kann die erste Schaltwalze 50 folglich in Rotation versetzt werden.

Derartige Schaltwalzen dienen im Allgemeinen dazu, eine Drehbewegung einer Welle, die durch einen Benutzer als Schaltbewegung initiiert wurde, in eine lineare Bewegung von Schaltgabeln oder dergleichen umzusetzen, wobei die Schaltgabeln selektiv in axialer Richtung der Schaltwalze in Abhängigkeit der Winkelstellung der Schaltwalze verschoben werden. Für diesen Zweck weisen die Schaltwalzen Schaltkonturen auf, welche sich in Umfangsrichtung der Schaltwalze erstrecken und in denen bzw. von denen Mitnehmer der Schaltgabeln formschlüssig geführt werden. Dies wird nachfolgend anhand der Zeichnungen näher beschrieben.

An dem Außenumfang der ersten Schaltwalze 50 ist die Schaltkontur in Form einer Schaltwalzennut 55 ausgebildet, die wie man es aus den Figuren 2-7 erkennen kann axial konturiert ist.

An dem Außenumfang der zweiten Schaltwalze 60 sind in dem vorliegenden Ausführungsbeispiel zwei Schaltkonturen in Form von zwei Schaltwalzennuten 66 ausgebildet, die wie man es aus den Figuren 2-7 erkennen kann axial konturiert sind. Die Schaltwalzennuten 66 sind umlaufend ausgeführt, so dass ein Verdrehen der zweiten Schaltwalze 60 um 360 Grad möglich ist. Mit der zweiten Schaltwalze 60 können die Gangstufen 3 und 5 des elektrifizierten Teilgetriebes TG2 geschaltet werden. Dies wird an dieser Stelle nicht näher beschrieben.

In die Schaltwalzennut 55 der ersten Schaltwalze 50 greift ein Mitnehmer 54 ein. Der Mitnehmer 54 ist an der ersten Schaltstange 51 angebunden, die über das Koppelement 80 mit der zweiten Schaltstange 52 gekoppelt ist. An dieser zweiten Schaltstange 52 ist das Schaltelement 53 in Form einer Schaltgabel ausgeführt, welche an der zugeordneten nicht dargestellten Schaltmuffe angreift. Der Mitnehmer 54 ist als Nutenstein ausgeführt, der formschlüssig in die korrespondierende Schaltwalzennut 55 eingreift. Wie es aus den Zeichnungen weiterhin zu erkennen ist, ist die erste Schaltstange 51 parallel zur Drehachse der ersten Schaltwalze 50 ausgerichtet. Des Weiteren ist die zweite Schaltstange 52 parallel beabstandet zur ersten Schaltstange 51 ausgerichtet.

Ein Verdrehen der ersten Schaltwalze 50 führt bei geeigneter Ausführung der Schaltwalzennut 55 folglich zu einem axialen Versatz des Mitnehmers 54, des Koppelelements 80, der zweiten Schaltstange 52 sowie dem Schaltelement 53 und folglich zu einem axialen Versatz der zugeordneten Schaltmuffe, was mit dem Ein- oder Auslegen einer Gangstufe einhergeht. Die axiale Verlagerung des Mitnehmers 54 ist durch den Pfeil PF1, die axiale Verlagerung der zweiten Schaltstange 52 ist durch den Pfeil PF2 angezeigt.

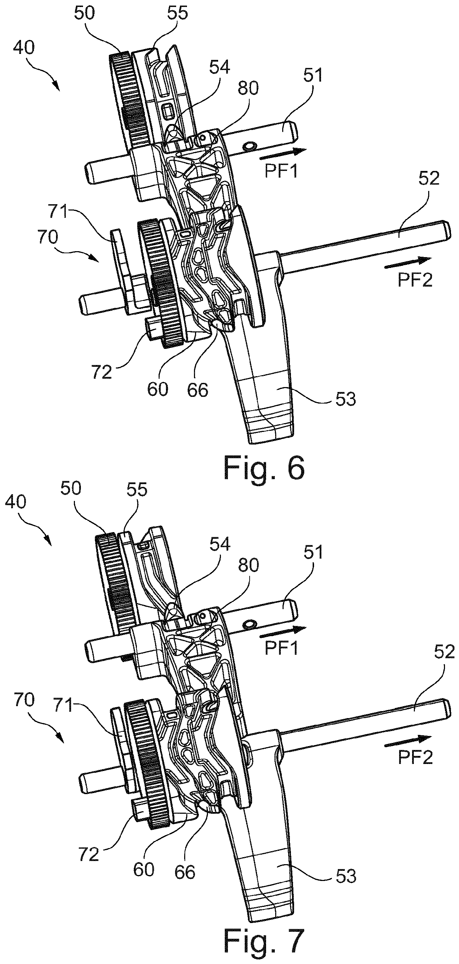

Bei dem vorliegenden Ausführungsbeispiel können mittels der zugeordneten Schaltmuffe die Gangstufen 2, 4, 6, R und P des ersten Teilgetriebes 32 (TG1) geschaltet. Des Weiteren weist die Schaltwalzennut 55 eine Referenzwinkelposition/Blockierposition auf, die eine axiale Verlagerung der zweiten Schaltstange 52 ausgehend von einer Neutralposition (dargestellt in Figur 6) in eine Aktivierungsposition der Anschlageinrichtung 70 (Drehung der zweiten Schaltwalze 60 wird gestoppt) bewirkt.

Wie eingangs bereits genannt, umfasst die Anschlageinrichtung 70 einen Schaltanschlag 71 und einen Endanschlag 72 die in der Referenzwinkelposition mit der ersten Schaltwalze 50 derart zusammenwirken, dass die zweite Schaltwalze 60 in dieser Situation in der Verdrehung blockiert ist.

Die Anschlageinrichtung 70 ist in den Figuren 2-7 zu erkennen. Der Schaltanschlag 71 ist ein als Hebel ausgeführtes Anschlagelement mit zwei gegenüberliegenden Anschlagflächen und ist an der zweiten Schaltstange 52 angebunden. Der Endanschlag 72 ist stirnseitig an der zweiten Schaltwalze 60 als axial sich erstreckendes Anschlagelement mit zwei gegenüberliegenden Anschlagflächen ausgebildet.

Der Schaltanschlag 71 kann zumindest in zwei Schaltstellungen verstellt werden. Da der Schaltanschlag 71 fix an der zweiten Schaltstange 52 angebunden ist, wird dieser bei einer axialen Verlagerung der ersten Schaltstange 51, die über das Koppelelement 80 fix gekoppelt ist, gleichermaßen axial verlagert.

Die erste Schaltstellung entspricht dabei der "Neutralposition", die in der Figur 6 gezeigt ist. Hierbei kann der Schaltanschlag 71 nicht in Eingriff mit dem Endanschlag 72 gebracht werden. In der Neutralposition kann die zweite Schaltwalze 60 frei um 360 Grad in beide Drehrichtungen verdreht werden.

Die zweite Schaltstellung entspricht der Aktivierungsposition, die in der Figur 7 gezeigt ist, die wie bereits beschrieben durch axiale Verlagerung der ersten und zweiten Schaltstange 51/52 erreicht wird. Hierbei kann der Schaltanschlag 71 in Eingriff mit dem Endanschlag 72 durch ein Aufeinandertreffen der sich gegenüberliegenden Anschlagflächen gebracht werden. Bei einem axialen Verlagern in die Aktivierungsposition wird die zweite Schaltwalze 60 solange weitergedreht, bis der erste Schaltschlag 71 mittels einer Anschlagfläche (in Abhängigkeit der Drehrichtung) auf die korrespondierende Anschlagfläche des Endanschlags 72 trifft und das Verdrehen der zweiten Schaltwalze 60 blockiert wird. Diese blockierte Position entspricht der Referenzwinkelposition in der eine Referenzierung des Schaltwinkels erfolgt.

### Bezugszeichenliste

- 10: Antriebsstrang
- 12: Antriebsmotor
- 13: Kraftstofftank
- 14: Doppelkupplungsgetriebe
- 16: Differential
- 18R: rechtes angetriebenes Rad
- 18L: linkes angetriebenes Rad
- 20: zweite Reibkupplung
- 22: zweites Teilgetriebe (TG2)
- 24: Schaltkupplung
- 26: zweiter Leistungsübertragungspfad
- 30: erste Reibkupplung
- 32: erstes Teilgetriebe (TG1)
- 36: erster Leistungsübertragungspfad
- 38: Gehäuse
- 40: Schaltvorrichtung
- 42: Anordnung
- 50: erste Schaltwalze
- 51: erste Schaltstange
- 52: zweite Schaltstange
- 53: Schaltelement
- 54: Mitnehmer
- 55: Schaltwalzennut
- 60: zweite Schaltwalze
- 66: Schaltwalzennut
- 70: Anschlageinrichtung
- 71: Schaltanschlag
- 72: Endanschlag
- 80: Koppelelement
- EM: elektrische Maschine
- PF1: Pfeil
- PF2: Pfeil

## Patentansprüche

1. Schaltvorrichtung (40) einer Getriebeeinheit, insbesondere eines Hybridantriebsstrangs für Kraftfahrzeuge,
- mit einer ersten Schaltwalze (50), wobei die erste Schaltwalze (50) um eine Schaltwalzenachse drehbar ist, und eine am Umfang der Außenfläche verlaufende Schaltkontur aufweist, wobei die Schaltkontur in einer axialen und radialen Richtung ausgebildet ist,
- mit einem Mitnehmer (54) der formschlüssig in die Schaltkontur eingreift,
- mit einer zweiten Schaltstange (52) welche mit dem Mitnehmer (54) derart gekoppelt ist, dass eine axiale Verlagerung des Mitnehmers (54) gleichermaßen eine axiale Verlagerung der zweiten Schaltstange (52) bewirkt, wobei die zweite Schaltstange (52) ein Schaltelement (53) zum Schalten der der Schaltkontur der ersten Schaltwalze (50) zugeordneten Gänge umfasst,
- mit einer zweiten Schaltwalze (60), wobei die zweite Schaltwalze (60) um eine Schaltwalzenachse endlos drehbar ist, und mindestens eine am Umfang der Außenfläche verlaufende umlaufende Schaltkontur aufweist, wobei die mindestens eine Schaltkontur in einer axialen und radialen Richtung ausgebildet ist,
- mit einer Anschlageinrichtung (70) zum Referenzieren eines Schaltwinkels der zweiten Schaltwalze (60) in einer Referenzwinkelposition,
- wobei die Anschlageinrichtung (70) einen Schaltanschlag (71) umfasst, der in einem vordefinierten Schaltwinkel/Schaltwinkelbereich der ersten Schaltwalze (50) in eine Aktivierungsposition aktivierbar ist derart, dass das Verdrehen der zweiten Schaltwalze (60) in der Referenzwinkelposition blockiert wird.

2. Schaltvorrichtung (40) nach Anspruch 1, **dadurch gekennzeichnet, dass** die Anschlageinrichtung (70) weiterhin einen Endanschlag (72) umfasst, wobei der Endanschlag (72) an der zweiten Schaltwalze (60) an der definierten Referenzwinkelposition angeordnet ist.

3. Schaltvorrichtung (40) nach Anspruch 1 oder 2, **dadurch gekennzeichnet, dass** der Mitnehmer (54) an einer ersten Schaltstange (51) angebunden ist, wobei die erste Schaltstange (51) parallel zu der zweiten Schaltstange (52) angeordnet ist, und wobei die erste und die zweite Schaltstange (51, 52) über ein Koppelelement (80) hinsichtlich einer Axialverschiebung zwangsgekoppelt sind.

4. Schaltvorrichtung (40) nach Anspruch 3, **dadurch gekennzeichnet, dass** der Schaltanschlag (71) auf der zweiten Schaltstange (52) angeordnet ist und eine erste und eine gegenüberliegende zweite Anschlagfläche umfasst, und dass der Endanschlag (72) stirnseitig an der zweiten Schaltwalze (60) angebunden ist und eine erste und eine gegenüberliegende zweite Anschlagfläche umfasst, und dass die Schaltvorrichtung derart ausgestaltet ist, dass in der Aktivierungsposition der Schaltanschlag (71) mit dem Endanschlag (72) in Eingriff kommt, wobei in Abhängigkeit der Drehrichtung eine Anschlagfläche des Schaltanschlags (71) auf eine Anschlagfläche des Endanschlags (72) trifft und die Verdrehung der zweiten Schaltwalze (60) blockiert wird.

5. Schaltvorrichtung (40) nach einem der vorangehenden Ansprüche, **dadurch gekennzeichnet, dass** der Schaltanschlag (71) eine Neutralposition umfasst, wobei der Schaltanschlag (71) in dieser Neutralposition derart angeordnet ist, , dass ein Verdrehen der zweiten Schaltwalze (60) frei um 360 Grad in beide Drehrichtungen möglich ist.

6. Schaltvorrichtung (40) nach einem der vorangehenden Ansprüche, **dadurch gekennzeichnet, dass** die Schaltkontur (55) der ersten Schaltwalze (50) zumindest einen ersten Schaltabschnitt umfasst, der der Aktivierungsposition zugeordnet ist.

7. Getriebeeinheit für einen Antriebsstrang (10) eines Kraftfahrzeugs, mit einer Schaltvorrichtung (40) zum Schalten von Gangstufen nach einem oder mehreren der vorgenannten Ansprüche.

## Claims

1. Shifting device (40) of a transmission unit, in particular of a hybrid drive train for motor vehicles,
- with a first shifting drum (50), the first shifting drum (50) being rotatable about a shifting drum axis, and having a shifting contour which runs on the circumference of the outer surface, the shifting contour being configured in an axial and radial direction,
- with a driver (54) which engages in a positively locking manner into the shifting contour,
- with a second selector rod (52) which is coupled to the driver (54) in such a way that an axial movement of the driver (54) equally brings about an axial movement of the second selector rod (52), the second selector rod (52) comprising a selector element (53) for selecting the gears which are assigned to the shifting contour of the first shifting drum (50),
- with a second shifting drum (60), the second shifting drum (60) being endlessly rotatable about a shifting drum axis and having at least one circumferential shifting contour which runs on the circumference of the outer surface, the at least one shifting contour being configured in an axial and radial direction,
- with a stop device (70) for referencing a shifting angle of the second shifting drum (60) in a reference angle position,
- the stop device (70) comprising a shifting stop (71) which can be activated in an activating position at a predefined shifting angle/in a predefined shifting angle range of the first shifting drum (50), in such a way that the rotation of the second shifting drum (60) is blocked in the reference angle position.

2. Shifting device (40) according to Claim 1, **characterized in that** the stop device (70) comprises, furthermore, an end stop (72), the end stop (72) being arranged on the second shifting drum (60) at the defined reference angle position.

3. Shifting device (40) according to Claim 1 or 2, **characterized in that** the driver (54) is attached to a first selector rod (51), the first selector rod (51) being arranged parallel to the second selector rod (52), and the first and the second selector rod (51, 52) being positively coupled with regard to an axial displacement via a coupling element (80).

4. Shifting device (40) according to Claim 3, **characterized in that** the shifting stop (71) is arranged on the second selector rod (52) and comprises a first and an opposite second stop surface, and **in that** the end stop (72) is attached on the end side to the second shifting drum (60) and comprises a first and an opposite second stop surface, and **in that** the shifting device is configured in such a way that the shifting stop (71) comes into engagement with the end stop (72) in the activating position, a stop surface of the shifting stop (71) coming into contact with a stop surface of the end stop (72) in a manner which is dependent on the rotational direction, and the rotation of the second shifting drum (60) being blocked.

5. Shifting device (40) according to one of the preceding claims, **characterized in that** the shifting stop (71) comprises a neutral position, the shifting stop (71) being arranged in this neutral position in such a way that a rotation of the second shifting drum (60) is possible freely by 360 degrees in both rotational directions.

6. Shifting device (40) according to one of the preceding claims, **characterized in that** the shifting contour (55) of the first shifting drum (50) comprises at least one first shifting portion which is assigned to the activating position.

7. Transmission unit for a drive train (10) of a motor vehicle, with a shifting device (40) for selecting gear stages according to one or more of the preceding claims.

## Revendications

1. Dispositif de changement de vitesse (40) d'une unité de transmission, plus particulièrement d'une chaîne cinématique hybride pour véhicules automobiles,
- comportant un premier tambour de changement de vitesse (50), le premier tambour de changement de vitesse (50) pouvant tourner autour d'un axe de tambour de changement de vitesse, et présentant un contour de changement de vitesse s'étendant à la périphérie de la surface extérieure, le contour de changement de vitesse étant réalisé dans une direction axiale et radiale,
- comportant un élément d'entraînement (54) qui vient en prise par complémentarité de formes dans le contour de changement de vitesse,
- comportant une deuxième tige de changement de vitesse (52), laquelle est accouplée à l'élément de changement de vitesse (54) de telle sorte qu'un déplacement axial de l'élément d'entraînement (54) provoque également un déplacement axial de la deuxième tige de changement de vitesse (52), la deuxième tige de changement de vitesse (52) comprenant un élément de changement de vitesse (53) servant au changement des vitesses associées au contour de changement de vitesse du premier tambour de changement de vitesse (50),
- comportant un deuxième tambour de changement de vitesse (60), le deuxième tambour de changement de vitesse (60) pouvant tourner sans fin autour d'un axe de tambour de changement de vitesse, et présentant au moins un contour de changement de vitesse périphérique s'étendant à la périphérie de la surface extérieure, l'au moins un contour de changement de vitesse étant réalisé dans une direction axiale et radiale,
- comportant un dispositif de butée (70) servant à référencer un angle de changement de vitesse du deuxième tambour de changement de vitesse (60) dans une position angulaire de référence,
- le dispositif de butée (70) comprenant une butée de changement de vitesse (71) qui peut être activée dans une position d'activation à un angle de changement de vitesse prédéfini/dans une plage angulaire de changement de vitesse prédéfinie du premier tambour de changement de vitesse (50), de telle sorte que la rotation du deuxième tambour de changement de vitesse (60) soit bloquée dans la position angulaire de référence.

2. Dispositif de changement de vitesse (40) selon la revendication 1, **caractérisé en ce que** le dispositif de butée (70) comprend en outre une butée de fin de course (72), la butée de fin de course (72) étant disposée au niveau du deuxième tambour de changement de vitesse (60) à la position angulaire de référence définie.

3. Dispositif de changement de vitesse (40) selon la revendication 1 ou 2, **caractérisé en ce que** l'élément d'entraînement (54) est connecté à une première tige de changement de vitesse (51), la première tige de changement de vitesse (51) étant disposée parallèlement à la deuxième tige de changement de vitesse (52), et la première et la deuxième tige de changement de vitesse (51, 52) étant accouplées à force par le biais d'un élément d'accouplement (80) en termes de déplacement axial.

4. Dispositif de changement de vitesse (40) selon la revendication 3, **caractérisé en ce que** la butée de changement de vitesse (71) est disposée sur la deuxième tige de changement de vitesse (52) et comprend une première surface de butée et une deuxième surface de butée opposée, et
**en ce que** la butée de fin de course (72) est connectée au deuxième tambour de changement de vitesse (60) du côté frontal et comprend une première surface de butée et une deuxième surface de butée opposée, et **en ce que** le dispositif de changement de vitesse est configuré de telle sorte que, dans la position d'activation, la butée de changement de vitesse (71) vient en prise avec la butée de fin de course (72), une surface de butée de la butée de changement de vitesse (71) heurtant une surface de butée de la butée de fin de course (72) en fonction du sens de rotation et la rotation du deuxième tambour de changement de vitesse (60) étant bloquée.

5. Dispositif de changement de vitesse (40) selon l'une des revendications précédentes, **caractérisé en ce que** la butée de changement de vitesse (71) comprend une position neutre, la butée de changement de vitesse (71) étant disposée dans cette position neutre de telle sorte qu'une rotation du deuxième tambour de changement de vitesse (60) soit possible librement sur 360 degrés dans les deux sens de rotation.

6. Dispositif de changement de vitesse (40) selon l'une des revendications précédentes, **caractérisé en ce que** le contour de changement de vitesse (55) du premier tambour de changement de vitesse (50) comprend au moins une première partie de changement de vitesse qui est associée à la position d'activation.

7. Unité de transmission pour une chaîne cinématique (10) d'un véhicule automobile, comportant un dispositif de changement de vitesse (40) servant au changement de rapports de vitesse selon l'une ou plusieurs des revendications précédentes.
